# EUROPÄISCHE PATENTSCHRIFT

(11) **EP 4 251 434 B1**
(45) Veröffentlichungstag und Bekanntmachung des Hinweises auf die Patenterteilung: **08.01.2025**
(21) Anmeldenummer: 21806985.4
(22) Anmeldetag: 02.11.2021
(51) Int. Cl.: B29D 30/58, B60C 13/00, B29D 30/54

(54) **NUTZFAHRZEUGREIFEN**
COMMERCIAL VEHICLE TIRE
PNEU POUR VÉHICULE COMMERCIAL

(30) Priorität: 25.11.2020 DE 102020214761
(43) Veröffentlichungstag der Anmeldung: 04.10.2023
(73) Patentinhaber: Continental Reifen Deutschland GmbH, 30175 Hannover (DE)
(72) Erfinder: KRISTEN, Florian, 30165 Hannover (DE); LUTZ, André, 30165 Hannover (DE)
(74) Vertreter: Continental Corporation
(86) Internationale Anmeldenummer: PCT/DE2021/200169
(87) Internationale Veröffentlichungsnummer: WO 2022/111770

(56) Entgegenhaltungen:
- DE-A1- 102014 209 422
- US-A1- 2004 084 120
- US-A1- 2020 031 174

## Beschreibung

Die Erfindung betrifft Nutzfahrzeugreifen, welcher kaltrunderneuerbar ist, mit Seitenwänden, Gürtellagen und einem profilierten Laufstreifen mit zu den Seitenwänden verlaufenden, außerhalb der Bodenaufstandsfläche befindlichen Schulterflanken, wobei auf zumindest einer Schulterflanke ein in Umfangsrichtung umlaufender, gegebenenfalls abschnittsweise unterbrochener, aus einer Vielzahl von Erhebungen gebildeter Abrauindikator zur Anzeige der Abrautiefe vorgesehen ist, wobei die Erhebungen gegenüber dem Niveau der Schulterflanke eine senkrecht zu diesem Niveau ermittelte maximale Stärke von 0,5 mm bis 2,0 mm aufweisen.

Bei der Kaltrunderneuerung eines Nutzfahrzeugreifens wird der abgefahrene Laufstreifen abgetragen und nach Anrauen wird unter Verwendung einer unvulkanisierten Bindegummischicht ein neuer profilierter und bereits vulkanisierter oder vorvulkanisierter Laufstreifen bei einer Temperatur zwischen insbesondere 95°C und 115°C unter Vulkanisieren des Bindegummis aufgebracht. Ein Nutzfahrzeugreifen kann dabei mehrmals runderneuert werden. Zur Anzeige der für das Abrauen empfohlenen Abrautiefe ist es bekannt, auf den Schulterflanken des Laufstreifens Abrauindikatoren auszubilden.

Ein Fahrzeugluftreifen eingangs genannter Art ist beispielsweise aus der DE 10 2014 209 422 A1 bekannt. Der Reifen weist einen Laufstreifen mit zu den Seitenwänden verlaufenden Schulterflanken auf, wobei auf zumindest einer Schulterflanke schraffurartig ausgebildete, linienförmige Erhebungen oder linienförmige Vertiefungen vorgesehen sind, welche einen Abrauindikator bilden. Die Erhebungen oder Vertiefungen erstrecken sich jeweils ausgehend von einem Radius, welcher der Abrautiefe entspricht, über eine in radialer Richtung ermittelte Höhe nach radial außen, also in Richtung Laufstreifenperipherie. Die linienförmigen Erhebungen bzw. Vertiefungen schließen, ermittelt am Radius, mit der radialen Reifenrichtung einen Winkel von 5° bis 60° ein. Gemäß einer bevorzugten Ausführung weisen die Erhebungen gegenüber dem Niveau der Schulterflanke eine Stärke von 0,5 mm bis 2,0 mm auf. Beim Abrauen des Laufstreifens signalisiert das Verschwinden der Schraffur, dass die Abrautiefe erreicht ist.

Bedingt durch die Form und Anordnung der Erhebungen besteht beim bekannten Abrauindikator bei Bordsteinkontakt sowie durch die beim Fahren auftretenden Dauerbelastungen die Gefahr, dass die Erhebungen einreißen. Ferner verursachen die langgestreckten Erhebungen des Abrauindikators beim Fahren Luftverwirbelungen und erhöhen derart den dem abrollenden Reifen wirkenden Luftwiderstand.

Der Erfindung liegt daher die Aufgabe zugrunde, bei einem Fahrzeugluftreifen eingangs genannter Art den Abrauindikator im Hinblick seinen Luftwiderstand und seine Rissbeständigkeit zu verbessern.

Gelöst wird die gestellte Aufgabe erfindungsgemäß dadurch, dass die Erhebungen des Abrauindikators kuppelförmig sind und eine kreisförmige Grundfläche mit einem Durchmesser von 0,5 mm bis 2,0 mm aufweisen.

Die gemäß der Erfindung vorgesehenen Erhebungen weisen somit eine aerodynamisch optimierte Form auf. Im Gegensatz zu den bekannten, linienförmigen Erhebungen neigen die gemäß der Erfindung kuppelförmig und mit kreisförmiger Grundfläche ausgeführten Erhebungen deutlich weniger dazu, Luftmoleküle während der Rotation des Reifens mitzureißen, wodurch der Luftwiderstand verringert ist. Ferner werden etwaige auf den Seitenwänden auftretende Verformungskräfte um die Erhebungen herum gleichmäßig verteilt, sodass Spannungsspitzen wirkungsvoll vermieden sind und die Rissbeständigkeit erhöht ist.

Gemäß einer bevorzugten Ausführung sind Erhebungen vorgesehen, welche an die der Laufstreifenperipherie zugewandten Seite eines an der Schulterflanke umlaufenden Bezugskreises angrenzen, wobei der Bezugskreis von einer auf die jeweilige Schulterflanke projizierten Bezugsfläche stammt, welche, im Querschnitt des Reifens betrachtet, im Bereich innerhalb der Bodenaufstandsfläche parallel zur Laufstreifenperipherie verläuft sowie im Bereich axial außerhalb der Bodenaufstandsfläche ihrem Verlauf folgend bis zu den Schulterflanken fortgeführt ist und welche in der Reifenäquatorialebene von der radial äußersten Gürtellage in Richtung Laufstreifenperipherie einen in radialer Richtung ermittelten Abstand von bis zu 2,0 mm aufweist. An dieser Stelle ausgebildete Erhebungen befinden sich in einer zur Anzeige der Abrautiefe besonders vorteilhaften Position.

Bei dieser Ausführung ist es ferner von Vorteil, wenn der Abstand, welchen die Bezugsfläche von der radial äußersten Gürtellage aufweist, mindestens 1,0 mm beträgt. Der Abrauindikator zeigt dadurch eine radial außerhalb der Gürtelgummierung liegende Abrautiefe an, sodass beim Abrauen die Wahrscheinlichkeit, dass die Gürtelgummierung versehentlich bzw. zu stark angeraut wird, verringert ist.

Im Hinblick auf die Sichtbarkeit und die Rissbeständigkeit der Erhebungen ist es günstig, wenn der Durchmesser der kreisförmigen Grundflächen der Erhebungen und die maximale Stärke der Erhebungen jeweils mindestens 1,0 mm beträgt.

Gemäß einer weiteren bevorzugten Ausführung beträgt die Größe der maximalen Stärke der Erhebungen höchstens 50% der Größe des Durchmessers der kreisförmigen Grundfläche der Erhebungen. Diese Maßnahme trägt ebenfalls zu einer guten Rissbeständigkeit der Erhebungen bei.

Gemäß einer weiteren bevorzugten Ausführung beträgt die Größe der maximalen Stärke der Erhebungen mindestens 25% der Größe des Durchmessers der kreisförmigen Grundfläche der Erhebungen.

Die auf den Seitenwänden beim Abrollen des Reifens auftretenden Verformungskräfte um die Erhebungen herum sind besonders gleichmäßig, wenn die Erhebungen jeweils die Form eines Kugelsegmentes, insbesondere höchstens einer Halbkugel, aufweisen. Spannungsspitzen werden dadurch besonders effektiv vermieden.

Gemäß einer weiteren bevorzugten Ausführung sind Erhebungen vorgesehen, welche voneinander als Minimalabstände ermittelte Abstände von 0,5 mm bis 1,5 mm aufweisen, wobei vorzugsweise Erhebungen vorgesehen sind, welche voneinander übereinstimmende, als Minimalabstände ermittelten Abstände aufweisen, sodass eine sehr gute Sichtbarkeit des Abrauindikators sichergestellt ist.

Ferner ist es von Vorteil, wenn die Erhebungen innerhalb eines Kreisringes mit einer senkrecht zur Umfangsrichtung ermittelte Breite von höchstens 20,0 mm ausgebildet sind. Dies ist im Hinblick auf den Luftwiderstand günstig.

Gemäß einer weiteren bevorzugten Ausführung sind die Erhebungen derart ausgebildet, dass der Abrauindikator insgesamt die Form eines Kreisrings aufweist, wobei die Erhebungen vorzugsweise ausschließlich innerhalb einer Anzahl von in Umfangsrichtung umlaufenden Reihen vorgesehen sind. Durch die Kreisringform lässt sich der Abrauvorgang über den gesamten Reifenumfang ideal überwachen. In diesem Zusammenhang sind Erhebungen, welche in einer Anzahl von in Umfangsrichtung umlaufenden Reihen vorgesehen sind, besonders vorteilhaft.

Gemäß einer alternativen bevorzugten Ausführung sind die Erhebungen derart ausgebildet, dass der Abrauindikator die Form eines abschnittsweise unterbrochenen Kreisrings aufweist, wobei die Erhebungen vorzugsweise ausschließlich in in Umfangsrichtung umlaufenden, in Umfangsrichtung abschnittsweise ununterbrochenen Reihen angeordnet sind. Auch diese Ausführung ist hinsichtlich Sichtbarkeit und Luftwiderstand des Abrauindikators vorteilhaft.

Gemäß einer weiteren bevorzugten Ausführung umfasst der Abrauindikator eine Anzahl von in Umfangsrichtung ausgerichteten, neben und parallel zueinander verlaufende Reihen aus hintereinander angeordneten Erhebungen oder ist aus solchen Reihen gebildet, wobei die Reihen jeweils eine in Umfangsrichtung ermittelte Länge von vorzugsweise 20,0 mm bis 200,0 mm aufweisen. Mittels solcher Reihen lässt sich der Fortschritt des Abrauvorgangs gut mitverfolgen.

Bei dieser Ausführung ist es ferner günstig, wenn einander benachbarte Reihen mit voneinander abweichenden Längen vorgesehen sind, wobei die Länge von Reihe zu Reihe in Richtung Laufstreifenperipherie in insbesondere gleichen Ausmaß abnimmt, wobei - jeweils bezogen auf zwei benachbarte Reihen - die Reihe mit der größten Länge die Reihe mit der kleineren Länge an jedem Ende mit übereinstimmenden Überstanden überragt.

Bevorzugter Weise ist auf jeder Schulterflanke ein Abrauindikator ausgebildet.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 einen schematischen Teilquerschnitt durch einen Nutzfahrzeugreifen im Bereich des Laufstreifens und des Gürtelverbandes,
Fig. 2 eine Ansicht auf einen Umfangsabschnitt einer Schulterflanke des Nutzfahrzeugreifens mit einer ersten Ausführungsvariante der Erfindung,
Fig. 3 eine Ansicht auf einen Umfangsabschnitt einer Schulterflanke des Nutzfahrzeugreifens mit einer zweiten Ausführungsvariante der Erfindung und
Fig. 4 eine Ansicht auf einen Umfangsabschnitt einer Schulterflanke des Nutzfahrzeugreifens mit einer dritten Ausführungsvariante der Erfindung.

Die Erfindung befasst sich mit einem Abrauindikator zur Anzeige der Abrautiefe eines für die Kaltrunderneuerung vorgesehenen Nutzfahrzeugreifens.

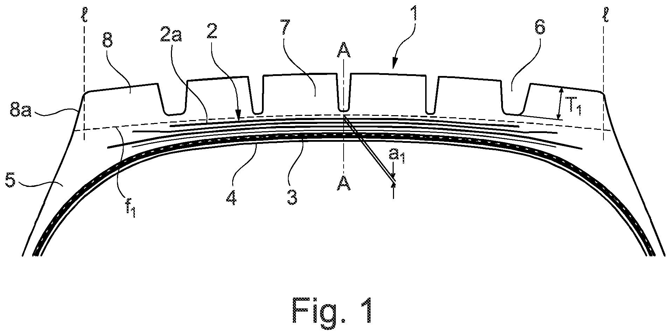

In Fig. 1 sind von den Bauteilen des Nutzfahrzeugreifens ein Laufstreifen 1, ein Gürtelverband 2 mit vier Gürtellagen 2a, eine Karkasseinlage 3 und eine Innenschicht 4 sowie die radial äußeren Endabschnitte von Seitenwänden 5 gezeigt. Die Reifenäquatorialebene ist durch eine Linie A-A, die seitlichen Ränder des Laufstreifens 1 bzw. der Bodenaufstandsfläche des Laufstreifens 1 (gemäß E.T.R.T.O-Standard) sind durch zwei parallel zur Reifenäquatorialebene verlaufende Linien I angedeutet.

Der Laufstreifen 1 ist mit einer Profilierung versehen, welche im dargestellten Beispiel fünf auf Profiltiefe T₁ ausgeführte Umfangsrillen 6 umfasst, sodass der Laufstreifen 1 vier mittlere Profilrippen 7 und zwei schulterseitige Profilrippen 8 aufweist. Die schulterseitigen Profilrippen 8 weisen außerhalb der Bodenaufstandsfläche jeweils eine bis zum seitlichen Rand der Bodenaufstandsfläche (Linie I) reichende, zur entsprechenden Seitenwand 5 verlaufende Schulterflanke 8a auf.

Die eingangs bereits erwähnte Abrautiefe ist in Fig. 1 durch eine Bezugsfläche f₁ gekennzeichnet. Die Bezugsfläche f₁ verläuft, im Reifenquerschnitt betrachtet, radial innerhalb der auf Profiltiefe T₁ ausgeführten Umfangsrillen 6, im Bereich zwischen den Linien I parallel zur Laufstreifenperipherie und ist im Bereich axial außerhalb der Linien I ihrem Verlauf folgend bis zu den Schulterflanken 8a fortgeführt, wobei die Bezugsfläche f₁ in der Reifenäquatorialebene (Linie A-A) von der radial äußersten Gürtellage 2a, ermittelt in radialer Richtung sowie in Richtung Laufstreifenperipherie, einen Abstand a₁ von bis zu 2,0 mm aufweist. Bevorzugter Weise beträgt der Abstand a₁ mindestens 1,0 mm. Die Fortführung der Bezugsfläche f₁ in die Bereiche axial außerhalb der Linien l erfolgt, im Reifenquerschnitt betrachtet, mit jenem Krümmungsradius, welcher der lokalen Krümmung der Bezugsfläche f₁ im Schnittpunkt mit der Linie l am besten angenähert ist.

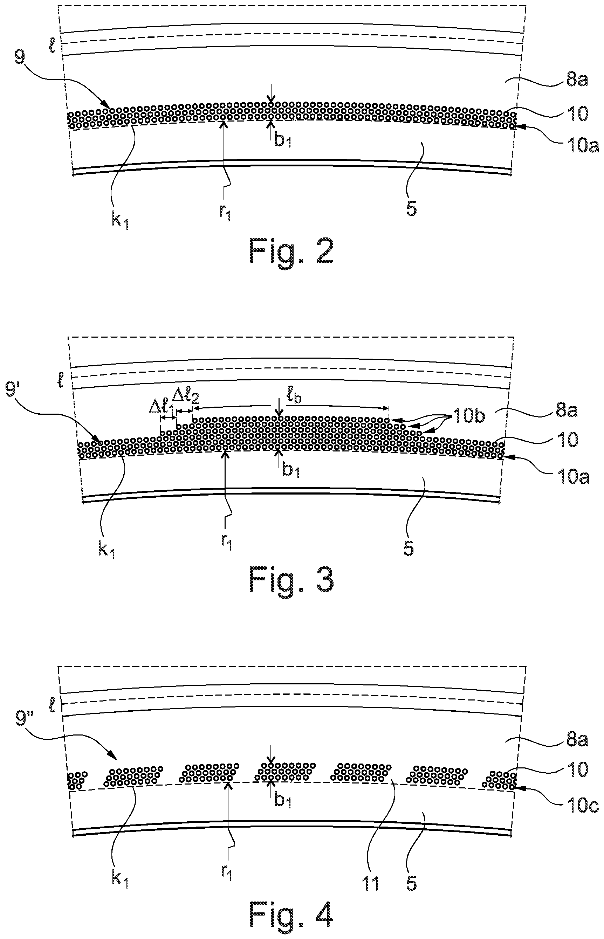

Fig. 2 bis Fig. 4 zeigen je eine Seitenansicht (Sichtrichtung gemäß der Richtung der Rotationsachse des Reifens) auf einen Abschnitt des Reifens und daher Ansichten auf Umfangsabschnitte einer Schulterflanke 8a mit angrenzendem Umfangsabschnitt des radial äußeren Endabschnittes der anschließenden Seitenwand 5. Die auf die jeweilige Schulterflanke 8a projizierte Bezugsfläche f₁ entspricht einem auf der Schulterflanke 8a umlaufenden Bezugskreis k₁ mit einem Radius r₁, wobei der Mittelpunkt des Bezugskreises k₁ auf der nicht gezeigten Rotationsachse des Reifens liegt. Auf jeder Schulterflanke 8a ist angrenzend an den Bezugskreis k₁ im Bereich zwischen dem Bezugskreis k₁ und dem seitlichen Rand der Bodenaufstandsfläche (Linie l) ein in Umfangsrichtung umlaufender, gegebenenfalls abschnittsweise unterbrochener Abrauindikator 9 (Fig. 2), 9' (Fig. 3), 9" (Fig. 4) zur Anzeige der Abrautiefe ausgebildet. Der Abrauindikator 9, 9', 9" ist aus einer Vielzahl von übereinstimmend ausgeführten kuppelförmigen Erhebungen 10 gebildet, welche jeweils eine senkrecht zum Niveau der Schulterflanke 8a ermittelte maximale Stärke von 0,5 mm bis 2,0 mm, insbesondere von mindestens 1,0 mm, und eine kreisförmige Grundfläche mit einem am Niveau der Schulterflanke 8a ermittelten Durchmesser von 0,5 mm bis 2,0 mm, insbesondere von mindestens 1,0 mm, aufweisen. Bevorzugter Weise beträgt die Größe der maximalen Stärke höchstens 50% der Größe des Durchmessers. Ferner weisen die kuppelförmigen Erhebungen 10 bevorzugt jeweils die Form eines Kugelsegmentes auf, welches besonders bevorzugt höchstens eine Halbkugel ist. Ferner sind die Erhebungen 10, ermittelt am Niveau der Schulterflanke 8a, unter vorzugsweise übereinstimmenden als Minimalabstände ermittelten Abständen von 0,5 mm bis 1,5 mm ausgebildet.

Der in Fig. 2 gezeigte Abrauindikator 9 ist aus drei in Umfangsrichtung umlaufenden Reihen 10a von Erhebungen 10 gebildet und weist daher die Form eines Kreisrings auf.

Der in Fig. 3 dargestellte Abrauindikator 9' unterscheidet sich vom Abrauindikator 9 dadurch, dass lokal zusätzlich eine Gruppe aus drei in Umfangsrichtung ausgerichteten, neben und parallel zueinander verlaufenden Reihen 10b aus Erhebungen 10 vorgesehen ist. Die Reihen 10b weisen jeweils eine in Umfangsrichtung ermittelte Länge l_{b} auf, wobei die Länge l_{b} ausgehend von der zu den Reihen 10a nächstliegenden Reihe 10b von Reihe 10b zu Reihe 10b in insbesondere gleichem Ausmaß abnimmt, sodass eine der Reihen 10b die größte Länge l_{b}, eine der Reihen 10b die kleinste Länge l_{b} und eine der Reihen 10b eine mittlere Länge l_{b} aufweist. Die Reihe 10b mit der größten Länge l_{b} überragt die Reihe 10b mit der mittleren Länge l_{b} an jedem Ende mit einem in Umfangsrichtung ermittelten Überstand Δl₁. Ferner überragt die Reihe 10b mit der mittleren Länge l_{b} die Reihe 10b mit der kleinsten Länge l_{b} an jedem Ende mit einem in Umfangsrichtung ermittelten Überstand Δl₂, dessen Größe beim gezeigten Ausführungsbeispiel mit der Größe des Überstandes Δl₁ übereinstimmt. Die Länge l_{b} beträgt vorzugsweise 20,0 mm bis 200,0 mm. Es können mehrere Gruppen von Reihen 10b an unterschiedlichen Umfangspositionen des Abrauindikators 9 vorgesehen sein. Beispielsweise sind vier um 90° zueinander versetzt angeordnete Gruppen von Reihen 10b vorgesehen.

Der in Fig. 4 gezeigte Abrauindikator 9" unterscheidet sich vom Abrauindikator 9 dadurch, dass er abschnittsweise unterbrochen ist, wobei die resultierenden von Erhebungen 10 freien Unterbrechungen 11 im Wesentlichen parallelogrammförmig sind. Insbesondere sind die Erhebungen 10 vorzugsweise ausschließlich in in Umfangsrichtung umlaufenden, in Umfangsrichtung abschnittsweise unterbrochenen Reihen 10c angeordnet.

Bei sämtlichen beschriebenen Varianten sind die Erhebungen 10 unmittelbar benachbarter Reihen 10a, 10b, 10c unter einem in Umfangsrichtung ermittelten Versatz, welcher 50% des Durchmessers einer Erhebung 10 entspricht, angeordnet. Bevorzugter Weise sind die Erhebungen 10 innerhalb eines

Kreisringes mit einer senkrecht zur Umfangsrichtung ermittelte Breite b₁ (Fig. 2 bis Fig. 4) von höchstens 20,0 mm ausgebildet.

Die Erfindung ist auf die beschriebenen Ausführungsbeispiele nicht beschränkt, wobei der Schutzumfang der Erfindung durch die Ansprüche definiert ist.

Es ist auf zumindest einer Schulterflanke ein Abrauindikator ausgebildet.

### Bezugsziffernliste

- 1: Laufstreifen
- 2: Gürtelverband
- 2a: Gürtellage
- 3: Karkasseinlage
- 4: Innenschicht
- 5: Seitenwand
- 6: Umfangsrille
- 7: mittlere Profilrippe
- 8: schulterseitige Profilrippe
- 8a: Schulterflanke
- 9, 9', 9": Abrauindikator
- 10: Erhebung
- 10a, 10b,: 10c.Reihe
- 11: Unterbrechung
- A-A: Linie (Reifenäquatorialebene)
- a₁: Abstand
- b₁: Breite
- f₁: Bezugsfläche (Abrautiefe)
- k₁: Bezugskreis (Abrautiefe)
- l: Linie (seitlicher Rand der Bodenaufstandsfläche)
- l_{b}: Länge
- Δl₁, Δl2: Überstand
- r₁: Radius
- T₁: Profiltiefe

## Patentansprüche

1. Nutzfahrzeugreifen, welcher kaltrunderneuerbar ist, mit Seitenwänden (5), Gürtellagen (2a) und einem profilierten Laufstreifen (1) mit zu den Seitenwänden (5) verlaufenden, außerhalb der Bodenaufstandsfläche befindlichen Schulterflanken (8a), wobei auf zumindest einer Schulterflanke (8a) ein in Umfangsrichtung umlaufender, gegebenenfalls abschnittsweise unterbrochener, aus einer Vielzahl von Erhebungen (10) gebildeter Abrauindikator (9, 9', 9") zur Anzeige der Abrautiefe vorgesehen ist, wobei die Erhebungen (10) gegenüber dem Niveau der Schulterflanke (8a) eine senkrecht zu diesem Niveau ermittelte maximale Stärke von 0,5 mm bis 2,0 mm aufweisen,
**dadurch gekennzeichnet,**
**dass** die Erhebungen (10) des Abrauindikators (9, 9', 9") kuppelförmig sind und eine kreisförmige Grundfläche mit einem Durchmesser von 0,5 mm bis 2,0 mm aufweisen.

2. Nutzfahrzeugreifen nach Anspruch 1, **dadurch gekennzeichnet, dass** Erhebungen (10) vorgesehen sind, welche an die der Laufstreifenperipherie zugewandten Seite eines an der Schulterflanke (8a) umlaufenden Bezugskreises (k₁) angrenzen, wobei der Bezugskreis (k₁) von einer auf die jeweilige Schulterflanke (8a) projizierten Bezugsfläche (f₁) stammt,
welche, im Querschnitt des Reifens betrachtet, im Bereich innerhalb der Bodenaufstandsfläche parallel zur Laufstreifenperipherie verläuft sowie im Bereich axial außerhalb der Bodenaufstandsfläche ihrem Verlauf folgend bis zu den Schulterflanken (8a) fortgeführt ist und
welche in der Reifenäquatorialebene (Linie A-A) von der radial äußersten Gürtellage (2a) in Richtung Laufstreifenperipherie einen in radialer Richtung ermittelten Abstand (a₁) von bis zu 2,0 mm aufweist.

3. Nutzfahrzeugreifen nach Anspruch 2, **dadurch gekennzeichnet, dass** der Abstand (a₁), welchen die Bezugsfläche (f₁) von der radial äußersten Gürtellage (2a) aufweist, mindestens 1,0 mm beträgt.

4. Nutzfahrzeugreifen nach einem der Ansprüche 1 bis 3, **dadurch gekennzeichnet, dass** der Durchmesser der kreisförmigen Grundflächen der Erhebungen (10) mindestens 1,0 mm beträgt.

5. Nutzfahrzeugreifen nach einem der Ansprüche 1 bis 4, **dadurch gekennzeichnet, dass** die maximale Stärke der Erhebungen (10) mindestens 1,0 mm beträgt.

6. Nutzfahrzeugreifen nach einem der Ansprüche 1 bis 5, **dadurch gekennzeichnet, dass** die Größe der maximalen Stärke der Erhebungen (10) höchstens 50% der Größe des Durchmessers der kreisförmigen Grundfläche der Erhebungen (10) beträgt.

7. Nutzfahrzeugreifen nach einem der Ansprüche 1 bis 6, **dadurch gekennzeichnet, dass** die Größe der maximalen Stärke der Erhebungen (10) mindestens 25% der Größe des Durchmessers der kreisförmigen Grundfläche der Erhebungen (10) beträgt.

8. Nutzfahrzeugreifen nach einem der Ansprüche 1 bis 7, **dadurch gekennzeichnet, dass** die Erhebungen (10) jeweils die Form eines Kugelsegmentes, insbesondere höchstens einer Halbkugel, aufweisen.

9. Nutzfahrzeugreifen nach einem der Ansprüche 1 bis 8, **dadurch gekennzeichnet, dass** Erhebungen (10) vorgesehen sind, welche voneinander als Minimalabstände ermittelte Abstände von 0,5 mm bis 1,5 mm aufweisen, wobei vorzugsweise Erhebungen (10) vorgesehen sind, welche voneinander übereinstimmende, als Minimalabstände ermittelten Abstände aufweisen.

10. Nutzfahrzeugreifen nach einem der Ansprüche 1 bis 9, **dadurch gekennzeichnet, dass** die Erhebungen (10) innerhalb eines Kreisringes mit einer senkrecht zur Umfangsrichtung ermittelte Breite (b₁) von höchstens 20,0 mm ausgebildet sind.

11. Nutzfahrzeugreifen nach einem der Ansprüche 1 bis 10, **dadurch gekennzeichnet, dass** die Erhebungen (10) derart ausgebildet sind, dass der Abrauindikator (9) insgesamt die Form eines Kreisrings aufweist, wobei die Erhebungen (10) vorzugsweise ausschließlich innerhalb einer Anzahl von in Umfangsrichtung umlaufenden Reihen (10a) vorgesehen sind.

12. Nutzfahrzeugreifen nach einem der Ansprüche 1 bis 10, **dadurch gekennzeichnet, dass** die Erhebungen (10) derart ausgebildet sind, dass der Abrauindikator (9") die Form eines abschnittsweise unterbrochenen Kreisrings aufweist, wobei die Erhebungen (10) vorzugsweise ausschließlich in in Umfangsrichtung umlaufenden, in Umfangsrichtung abschnittsweise ununterbrochenen Reihen (10c) angeordnet sind.

13. Nutzfahrzeugreifen nach einem der Ansprüche 1 bis 12, **dadurch gekennzeichnet, dass** der Abrauindikator (9`) eine Anzahl von in Umfangsrichtung ausgerichteten, neben und parallel zueinander verlaufende Reihen (10b) aus hintereinander angeordneten Erhebungen (10) umfasst oder aus solchen Reihen (10b) gebildet ist, wobei die Reihen (10b) jeweils eine in Umfangsrichtung ermittelte Länge (l_{b}) von vorzugsweise 20,0 mm bis 200,0 mm aufweisen.

14. Nutzfahrzeugreifen nach Anspruch 13, **dadurch gekennzeichnet, dass** einander benachbarte Reihen (10b) mit voneinander abweichenden Längen (l_{b}) vorgesehen sind, wobei die Länge (l_{b}) von Reihe (10b) zu Reihe (10b) in Richtung Laufstreifenperipherie in insbesondere gleichen Ausmaß abnimmt, wobei - jeweils bezogen auf zwei benachbarte Reihen (10b) - die Reihe (10b) mit der größten Länge (l_{b}) die Reihe (10b) mit der kleineren Länge (l_{b}) an jedem Ende mit übereinstimmenden Überstanden (Δl₁, Δl₂) überragt.

15. Nutzfahrzeugreifen nach einem der Ansprüche 1 bis 14, **dadurch gekennzeichnet, dass** auf jeder Schulterflanke (8a) ein Abrauindikator (9, 9', 9") ausgebildet ist.

## Claims

1. Commercial vehicle tyre which is cold-retreadable and comprises sidewalls (5), belt plies (2a) and a profiled tread (1) with shoulder flanks (8a) located outside the ground contact area and running to the sidewalls (5), wherein a buffing indicator (9, 9`, 9") for indicating the buffing depth is provided on at least one shoulder flank (8a), running around in the circumferential direction, possibly interrupted in some portions and formed by a multiplicity of elevations (10), wherein the elevations (10) have with respect to the level of the shoulder flank (8a) a maximum thickness, determined perpendicularly to this level, of 0.5 mm to 2.0 mm,
**characterized in that**
the elevations (10) of the buffing indicator (9, 9`, 9") are dome-shaped and have a circular base area with a diameter of 0.5 mm to 2.0 mm.

2. Commercial vehicle tyre according to Claim 1, **characterized in that** elevations (10) which border on the side of a reference circle (k₁) running around the shoulder flank (8a) that faces the tread periphery are provided, the reference circle (k₁) originating from a reference surface (f₁) projected onto the respective shoulder flank (8a),
which, when viewed in cross section of the tyre, runs parallel to the tread periphery in the region inside the ground contact area and continues to follow its course to the shoulder flanks (8a) in the region axially outside the ground contact area; and which has in the tyre equatorial plane (line A-A) a distance (a₁), determined in the radial direction, from the radially outermost belt ply (2a) in the direction of the tread periphery of up to 2.0 mm.

3. Commercial vehicle tyre according to Claim 2, **characterized in that** the distance (a₁) between the reference surface (f₁) and the radially outermost belt ply (2a) is at least 1.0 mm.

4. Commercial vehicle tyre according to one of Claims 1 to 3, **characterized in that** the diameter of the circular base areas of the elevations (10) is at least 1.0 mm.

5. Commercial vehicle tyre according to one of Claims 1 to 4, **characterized in that** the maximum thickness of the elevations (10) is at least 1.0 mm.

6. Commercial vehicle tyre according to one of claims 1 to 5, **characterized in that** the magnitude of the maximum thickness of the elevations (10) is at most 50% of the magnitude of the diameter of the circular base area of the elevations (10).

7. Commercial vehicle tyre according to one of Claims 1 to 6, **characterized in that** the magnitude of the maximum thickness of the elevations (10) is at least 25% of the magnitude of the diameter of the circular base area of the elevations (10).

8. Commercial vehicle tyre according to one of Claims 1 to 7, **characterized in that** the elevations (10) each have the shape of a spherical segment, in particular at most of a hemisphere.

9. Commercial vehicle tyre according to one of Claims 1 to 8, **characterized in that** elevations (10) which have distances of 0.5 mm to 1.5 mm from one another, determined as minimum distances, are provided, with elevations (10) which have mutually matching distances, determined as minimum distances, preferably being provided.

10. Commercial vehicle tyre according to one of Claims 1 to 9, **characterized in that** the elevations (10) are formed within a circular ring with a width (b₁), determined perpendicularly to the circumferential direction, of at most 20.0 mm.

11. Commercial vehicle tyre according to one of Claims 1 to 10, **characterized in that** the elevations (10) are formed in such a manner that the buffing indicator (9) as a whole has the shape of a circular ring, with the elevations (10) preferably being provided exclusively within a number of rows (10a) running in the circumferential direction.

12. Commercial vehicle tyre according to one of Claims 1 to 10, **characterized in that** the elevations (10) are formed in such a manner that the buffing indicator (9") has the shape of a circular ring interrupted in some portions, the elevations (10) preferably being arranged exclusively in rows (10c) running around in the circumferential direction that are uninterrupted in some portions in the circumferential direction.

13. Commercial vehicle tyre according to one of Claims 1 to 12, **characterized in that** the buffing indicator (9`) comprises a number of rows (10b) of elevations (10) arranged one behind the other, aligned in the circumferential direction and running next to and parallel to one another, or is formed by such rows (10b), the rows (10b) each having a length (l_{b}), determined in the circumferential direction, of preferably 20.0 mm to 200.0 mm.

14. Commercial vehicle tyre according to Claim 13, **characterized in that** adjacent rows (10b) of different lengths (l_{b}) are provided, the length (l_{b}) decreasing from row (10b) to row (10b) in the direction of the tread periphery, in particular to the same extent, with the row (10b) of the greatest length (l_{b}) - with respect to two adjacent rows (10b) in each case - protruding beyond the row (10b) of smaller length (l_{b}) at each end with matching overhangs (Δl₁, Δl₂).

15. Commercial vehicle tyre according to one of Claims 1 to 14, **characterized in that** a buffing indicator (9, 9`, 9") is formed on each shoulder flank (8a).

## Revendications

1. Pneumatique de véhicule utilitaire, qui est apte à être rechapé à froid, avec des parois latérales (5), des couches de ceinture (2a) et une bande de roulement profilée (1) avec des flancs d'épaulement (8a) s'étendant vers les parois latérales (5) et se trouvant à l'extérieur de la surface de contact avec le sol, dans lequel, sur au moins un flanc d'épaulement (8a), se trouve un indicateur d'usure (9, 9', 9") s'étendant dans la direction circonférentielle, optionnellement interrompu par sections, formé par une pluralité de reliefs (10), qui est prévu pour indiquer la profondeur d'usure, les reliefs (10) présentant par rapport au niveau du flanc d'épaulement (8a) une épaisseur maximale déterminée perpendiculairement à ce niveau allant de 0,5 mm à 2,0 mm,
**caractérisé**
**en ce que** les reliefs (10) de l'indicateur d'usure (9, 9', 9") sont en forme de dôme et présentent une surface de base circulaire d'un diamètre allant de 0,5 mm à 2,0 mm.

2. Pneumatique de véhicule utilitaire selon la revendication 1, **caractérisé en ce qu'**il est prévu des reliefs (10) qui sont adjacents au côté, tourné vers la périphérie de la bande de roulement, d'un cercle de référence (k₁) courant sur le flanc d'épaulement (8a), le cercle de référence (k₁) provenant d'une surface de référence (f₁) projetée sur le flanc d'épaulement (8a) correspondant,
qui, vue en coupe transversale du pneumatique, s'étend parallèlement à la périphérie de la bande de roulement dans la zone située à l'intérieur de la surface de contact avec le sol et se poursuit jusqu'aux flancs d'épaulement (8a) en suivant son tracé dans la zone située axialement à l'extérieur de la surface de contact avec le sol, et
qui présente, dans le plan équatorial du pneumatique (ligne A-A), une distance (a₁), déterminée dans le sens radial, allant jusqu'à 2,0 mm depuis la couche de ceinture (2a) radialement la plus extérieure en direction de la périphérie de la bande de roulement.

3. Pneumatique pour véhicule utilitaire selon la revendication 2, **caractérisé en ce que** la distance (a₁) que présente la surface de référence (f₁) par rapport à la couche de ceinture radialement la plus extérieure (2a) est d'au moins 1,0 mm.

4. Pneumatique pour véhicule utilitaire selon l'une des revendications 1 à 3, **caractérisé en ce que** le diamètre des surfaces de base circulaires des reliefs (10) est d'au moins 1,0 mm.

5. Pneumatique pour véhicule utilitaire selon l'une des revendications 1 à 4, **caractérisé en ce que** l'épaisseur maximale des reliefs (10) est d'au moins 1,0 mm.

6. Pneumatique pour véhicule utilitaire selon l'une des revendications 1 à 5, **caractérisé en ce que** la taille de l'épaisseur maximale des reliefs (10) représente au maximum 50% de la taille du diamètre de la base circulaire des reliefs (10).

7. Pneumatique pour véhicule utilitaire selon l'une des revendications 1 à 6, **caractérisé en ce que** la dimension de l'épaisseur maximale des reliefs (10) est au moins égale à 25% de la dimension du diamètre de la base circulaire des reliefs (10).

8. Pneumatique pour véhicule utilitaire selon l'une des revendications 1 à 7, **caractérisé en ce que** les reliefs (10) ont chacun la forme d'un segment de sphère, notamment au maximum d'une demi-sphère.

9. Pneumatique pour véhicule utilitaire selon l'une des revendications 1 à 8, **caractérisé en ce qu'**il est prévu des reliefs (10) qui présentent des distances entre eux allant de 0,5 mm à 1,5 mm déterminées comme distances minimales, des reliefs (10) étant de préférence prévus qui présentent des distances identiques entre eux déterminées comme distances minimales.

10. Pneumatique pour véhicule utilitaire selon l'une des revendications 1 à 9, **caractérisé en ce que** les reliefs (10) sont formés à l'intérieur d'un anneau circulaire d'une largeur (b₁), déterminée perpendiculairement à la direction circonférentielle, de 20,0 mm au maximum.

11. Pneumatique pour véhicule utilitaire selon l'une des revendications 1 à 10, **caractérisé en ce que** les reliefs (10) sont réalisés de telle sorte que l'indicateur d'usure (9) présente globalement la forme d'un anneau circulaire, les reliefs (10) étant prévus de préférence exclusivement à l'intérieur d'un certain nombre de rangées (10a) s'étendant dans la direction circonférentielle.

12. Pneumatique pour véhicule utilitaire selon l'une des revendications 1 à 10, **caractérisé en ce que** les reliefs (10) sont réalisés de telle sorte que l'indicateur d'usure (9") présente la forme d'un anneau circulaire interrompu par sections, les reliefs (10) étant de préférence exclusivement disposés selon des rangées (10c) périphériques ininterrompues par sections dans la direction circonférentielle.

13. Pneumatique de véhicule utilitaire selon l'une des revendications 1 à 12, **caractérisé en ce que** l'indicateur d'usure (9') comprend un certain nombre de rangées (10b) de reliefs (10) disposées les unes derrière les autres, orientées dans la direction circonférentielle, s'étendant à côté les unes des autres et parallèlement les unes aux autres, ou est formé de telles rangées (10b), les rangées (10b) présentant chacune une longueur (l_{b}), déterminée dans la direction circonférentielle, de préférence allant de 20,0 mm à 200,0 mm.

14. Pneumatique pour véhicule utilitaire selon la revendication 13, **caractérisé en ce que** des rangées (10b) voisines les unes des autres sont prévues avec des longueurs (l_{b}) différentes les unes des autres, la longueur (l_{b}) diminuant d'une rangée (10b) à une autre rangée (10b) en direction de la périphérie de la bande de roulement, en particulier dans la même mesure, dans lequel, - respectivement par rapport à deux rangées (10b) voisines, - la rangée (10b) avec la plus grande longueur (l_{b}) dépasse la rangée (10b) avec la plus petite longueur (l_{b}) à chaque extrémité, avec des dépassements (Δl₁, Δl₂) concordants.

15. Pneumatique pour véhicule utilitaire selon l'une des revendications 1 à 14, **caractérisé en ce qu'**un indicateur d'usure (9, 9', 9") est formé sur chaque flanc d'épaulement (8a).
